# EUROPEAN PATENT SPECIFICATION

(11) **EP 0 332 296 B1**
(45) Date of publication and mention of the grant of the patent: **17.03.1993**
(21) Application number: 89301313.6
(22) Date of filing: 13.02.1989
(51) Int. Cl.: G01P 3/486

(54) **Rotational speed sensing methods and apparatus**
Verfahren und Vorrichtung zur Drehgeschwindigkeitsbestimmung
Procédé et dispositif de détection de la vitesse de rotation

(30) Priority: 26.02.1988 US 160738
(43) Date of publication of application: 13.09.1989
(73) Proprietor: SIMMONDS PRECISION PRODUCTS INC., Akron, Ohio 44334-0501 (US)
(72) Inventor: Brennan, Brian William, Norwich New York 13815 (US)
(74) Representative: Foster, David Martyn

(56) References cited:
- FR-A- 2 564 586
- US-A- 3 699 350
- US-A- 4 281 325
- PATENT ABSTRACTS OF JAPAN, vol. 8, no. 129 (P-280)[1566], 15th June 1984; & JP-A-59 32 813 (DIESEL KIKI K.K.) 22-02-1984

## Description

The invention relates to apparatus comprising, in combination, an engine having a rotating shaft and a speed sensing device for sensing the rotational speed of the shaft, the combination including a source of electromagnetic radiation, a chopper of electromagnetic radiation mounted to rotate with the shaft, input means leading the electromagnetic radiation from the source to one end of a path which is positioned to be interrupted by the chopper as the shaft rotates, the path leading to output means which passes the electromagnetic radiation to a detector therefor which produces a speed-dependent signal dependent on the rotational speed of the shaft.

The invention also relates to a method of sensing the rotational speed of a shaft of an engine, comprising the steps of defining a path for electromagnetic radiation, passing electromagnetic radiation along the path, interrupting the electromagnetic radiation in the path in dependence on the rotational speed of the shaft, and detecting the electromagnetic radiation received from the path after such interruption, whereby to produce a speed-dependent signal dependent on the interruption rate and thereby dependent on the rotational speed of the shaft.

Such an apparatus and method are known from JP-A5 932 813 and Patent Abstracts of Japan, Vol.8, no.129 (p280) [1566]. In this known form of apparatus and method, a crankshaft carries a vane which, in dependence on the rotational speed of the shaft, interrupts a light path adjacent to the shaft and along which light is projected from a source to a phototransistor. However, such an arrangement using visible light would not be suitable for use actually in or adjacent to the combustion chamber of an engine because the atmosphere within such combustion chamber contains combustion products which are opaque to visible light. The invention is aimed at overcoming this problem.

In accordance with the invention, therefore, the known form of apparatus is characterized in that the engine is an engine whose atmosphere includes combustion products which are opaque to visible electromagnetic radiation, in that the path extends through part of the atmosphere within the engine, and in that the electromagnetic radiation produced by the source and detected by the detector is infra-red radiation which is substantially not attenuated by the combustion products.

Further according to the invention, the known method is characterized in that the engine is an engine the atmosphere in which contains carbonaceous combustion products which are opaque to visible electromagnetic radiation, in that the path extends through part of the atmosphere within the engine, and in that the step of passing electromagnetic radiation along the path comprises the step of passing infra-red radiation therealong which is substantially not attenuated by the combustion products.

A turbine engine and speed sensing device according to the invention, and speed sensing methods according to the invention, will now be described by way of example only and with reference to the accompanying drawings in which:-
Figure 1 is a schematic representation of the apparatus;
Figure 2 is a schematic representation of the bevelled ends of the optical fibres supported adjacent to a chopper in the apparatus of Figure 1; and
Figure 3 shows a curve for intensity of visible light and infrared radiation transmission through a film of carbonaceous residue at wavelengths from 600nm (visible) to 300,000nm (infrared).

In general terms, infrared radiation in the apparatus to be described is passed through optical fibres each having a bevelled end positioned adjacent to a turbine engine drive shaft to monitor the rotational speed thereof. Infrared radiation is continuously transmitted through an input optical fibre to a bevelled end located adjacent to a chopper. The chopper is mounted on the compressor drive shaft of the turbine engine. The chopped infrared radiation passes into the bevelled end of an output fibre which is connected to a monitoring system. During turbine engine operation, the bevelled ends of the optical fibres and the chopper are exposed to oil, combustion gases and particles which form a coating thereon. Turbine engines usually operate at temperatures above about 300°F. The accuracy of the monitoring of rotational speed is not significantly diminished by the carbonaceous coating which forms on the ends of the optical fibres. This coating is opaque to visible light but transparent to infrared radiation.

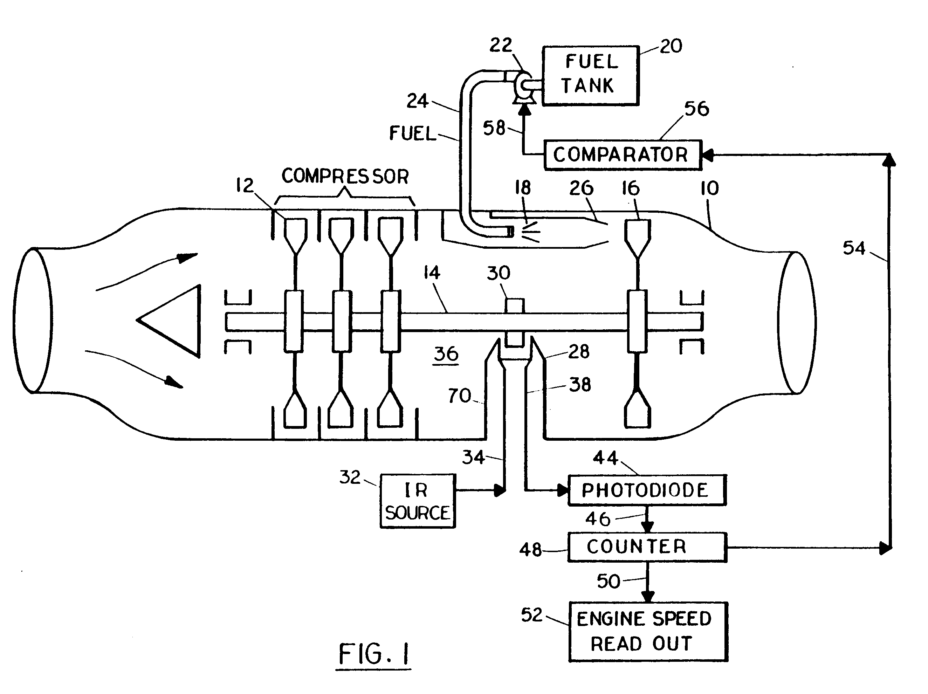

With more specific reference to Figure 1, a turbine engine 10 is shown which includes compressor blades 12 mounted on shaft 14. Turbine blades 16 are mounted on shaft 14. Fuel 18 is pumped from fuel tank 20 by pump 22 through fuel line 24 into combustion chamber 26, where it is burned with compressed air. The combustion products of the fuel are exhausted across turbine blades 16 which turn shaft 14 and compressor blades 12 which are mounted on shaft 14.

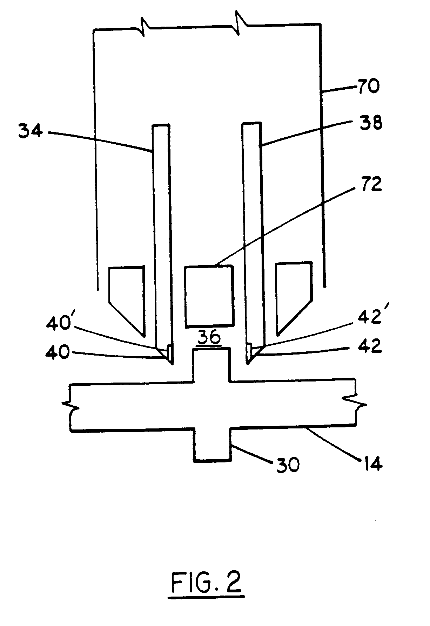

Air is compressed by compressor blades 12 before being conveyed into combustion chamber 26. The speed sensor 28 monitors the rate of rotation of the shaft 14. Teeth 30 chop a continuous beam of infrared radiation which is emitted from infrared radiation emitting diode 32 and conveyed through input optical fibre 34. The end of optical fibre 34 adjacent to chopper teeth 30 is bevelled to about a 45° angle to the central axis of fibre 34 to reflect radiation across the shaft 14. Figure 2 shows an enlarged view of the teeth 30 on the shaft 14 adjacent to optical fibres 34 and 38. The teeth 30 act as a chopper as they interrupt the infrared radiation being reflected from 45° bevelled end face 40 of input optical fibre 34 to end face 42 of output optical fibre 38, which is bevelled at a 45° angle to the central axis of fibre 38. The use of the 45° bevelled ends on the optical fibres allows the use of the fibres in a narrow space, and reduces the space required for rotational speed monitoring. The plane of end face 42 and the plane of end face 40 intersect at about a 90° angle. The fibres 34 and 38 are supported by jig 72 within metal tube 70.

A flat face 40′ adjacent to 45° bevelled end face 40 of the input optical fibre allows the infrared radiation to pass to flat face 42′ of the output optical fibre without substantial divergence thereof. Thus, the collimation of the infrared radiation is maintained by the flat faces 40′ and 42′. Since the optical fibres have cylindrical walls the radiation would be focussed if the flat faces 40′ and 42′ were not provided. Such focussing of the radiation would make construction of the system substantially less practical, as the output fibre would need to be placed near the focal plane of the radiation.

In the preferred embodiment of the invention, the infrared radiation passes through the input optical fibre 34 to the face 40 bevelled at an angle of 45° to the central axis of the fibre 34. From the face 40, reflected infrared radiation passes across the fibre 34 and through flat face 40′. The planes of flat faces 40′ and 42′ are substantially parallel and intersected at an angle of about 90° by the infrared radiation reflected from face 40. After passing through flat face 42′, the infrared radiation is reflected from bevelled face 42 into the output optical fibre 38.

The chopper teeth 30 are positioned equidistant from the rotational axis of the shaft 14. Each of the teeth 30 is equal in length, and equidistant from each of the adjacent teeth. The infrared radiation chopped by the teeth 30 passes through the turbine atmosphere 36 into the output fibre 38.

The chopper infrared radiation is not significantly obsctructed by the carbonaceous coating or film of oil and combustion products from the turbine atmosphere on the bevelled ends 40 and 42 of the optical fibres. The opacity of the carbonaceous coating to visible light renders the use thereof substantially inoperative or impractical in the system being described. The chopped infrared light from optical fibre 38 is converted to electrical current by photodiode 44 which is connected by electrical conductor 46 to counter 48. Counter 48 is connected by electrical conductor 50 to engine speed display 52 (Fig. 1).

The operator may visually observe the rotational speed of the shift 14 by viewing the display 52. The operator may regulate the volumetric flow rate of fuel to the combustion chamber 26 to vary the speed of the drive shaft 14. Counter 48 is connected by electrical conductor 54 to comparator 56, which compares the rotational speed of the shaft 14 to a preset rotational speed limit. The limit may be set based on experience that the shaft 14 has broken if its speed reaches or exceeds the preset limit. When the rotational speed of the drive shaft reaches the preset limit, the comparator 56 conveys a signal through electrical conductor 58 to open the switch of pump 22 which shuts it off stopping the flow of fuel in line 24. This prevents further damage to the engine, for example, from a blade 16 being broken at rotational speeds far in excess of those of normal operation and design limitations.

With more particular reference to Figure 2, the input fibre 34 and output fibre 38 are shown supported within metal tube 70 by jig 72 which, is a block which is preferably made of metal such as aluminium with passages through which the fibres extend, and a slot machined to accommodate the teeth 30. After the fibres are glued into the passages, the protruding fibre ends are ground and polished to be coplanar with the lower surface of the jig 72 which is at a 45 degree angle to central axes of the optical fibres.

An infrared radiation (IR) source 32 provides infrared radiation. For example a 940 nanometre infrared radiation emitting diode may be used to inject infrared radiation into the radiation source end of the input fibre 34, through which it travels to the 45 degree polished face at which it is directed to the side of the fibre and into the turbine atmosphere 36. As the teeth 30 move past the bevelled ends of the fibres, the spaces therebetween allow transmission of the infrared radiation to the bevelled end of the output fibre. The presence of oil and products of combustion on the bevelled ends 40 and 42 of the fibres 34 and 38 does not substantially interfere with infrared radiation transmission. The temperature at the bevelled ends 40 and 42 may be greater than 149C(300°F) during operation of the turbine 30 engine. At such temperatures, the oil and products of combustion on the bevelled ends 40 and 42 forms a carbonaceous film which is opaque to visible light.

Preferably, the infrared radiation used in the system described consists substantially of the one or more wavelengths greater than 780nm and less than 300,000nm. More preferably, the infrared radiation used consists substantially of one or more wavelengths greater than 850 nm and less than 200,000 nm. Most preferably, the infrared radiation used substantially consists of one or more wavelengths greater than about 780 nm and less than about 2500nm. In this most preferred range, wavelengths above 900 nm are preferred and wavelengths above 1100 nm are most preferred.

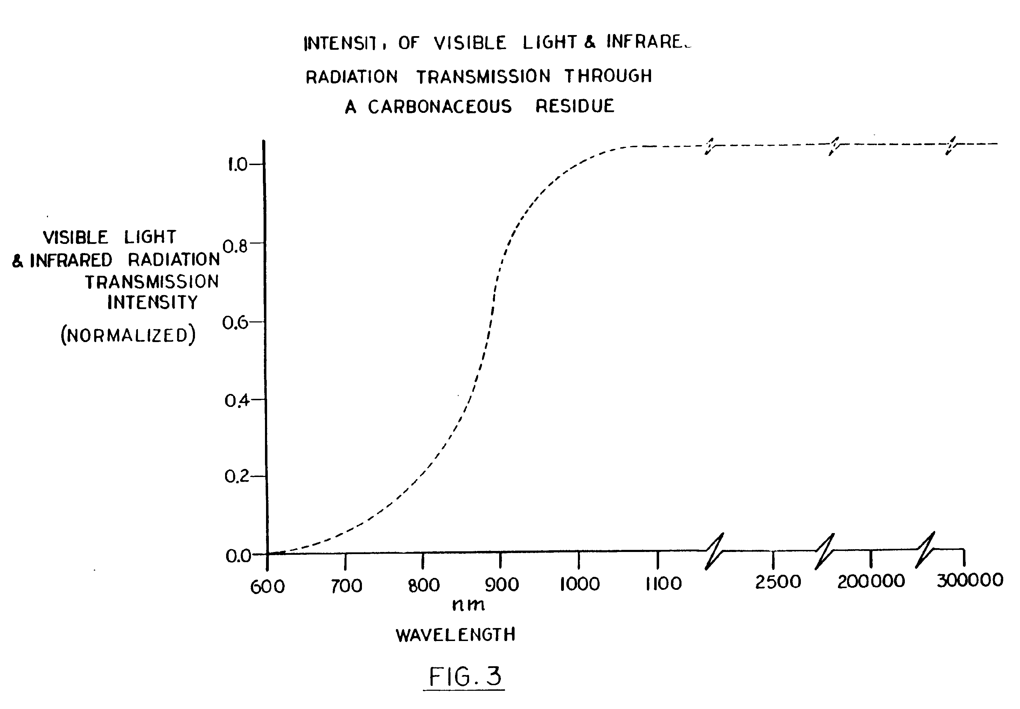

Figure 3 shows a curve for the intensity of visible light and infrared radiation transmitted through a film as a function of wavelength. This film is a carbonaceous residue baked onto a glass plate. The intensity of light and infrared radiation transmitted through the film of baked carbonaceous residue is shown to increase from wavelengths of visible light (600 nm) to short wavelength infrared radiation (1,100 nm). Infrared radiation having wavelengths from about 1100 nm to about 300,000 nm is substantially completely transmitted through the film. Very little, if any, visible light is transmitted through the film while infrared radiation is substantially unobstructed by the film.

For a given operating temperature, there is extreme background noise within a range of high intensity infrared radiation wavelengths around the peak in the black body radiation emitted from the engine 10. The monitoring wavelength emitted from the infrared radiation emitting diode 32 should not be within this range of high intensity wavelengths, because the monitoring wavelength would be dominated by the extreme background noise. For example, at an engine operating temperature of 300C (572°F) the peak in black body radiation occurs at about 5,000 nm. Thus, the use of an infrared radiation source which emits a wavelength in the range of within the range of from about 4900 nma to about 5100 nm would be noise-dominated. However, at sufficiently lower and higher engine operating temperatures, the use of a monitoring wavelength in the 4900 nm to 5100 nm range of wavelengths would not be dominated by interference from black body radiation.

The speed monitoring method and apparatus operate at all temperatures from start-up at ambient temperature (for example, -18C (0°F)) to steady operation temperatures of over 316C (600°F). Preferably, the method and system are operated at above 149C (300°F). More preferably, the method and system are operated at above 260C (500°F).

Other features, advantages and specific embodiments of this invention will become readily apparent to those exercising ordinary skill in the art after reading the foregoing disclosures. In this regard, while specific embodiments of this invention have been described in considerable detail, variations and modifications of these embodiments can be effected without departing from the scope of the invention as defined by the appended Claims.

## Claims

1. Apparatus comprising, in combination, an engine having a rotating shaft (14) and a speed sensing device (28) for sensing the rotational speed of the shaft (14), the apparatus including a source (32) of electromagnetic radiation, a chopper (30) of electro-magnetic radiation mounted to rotate with the shaft (14), input means (34) leading the electromagnetic radiation from the source (32) to one end of a path which is positioned to be interrupted by the chopper (30) as the shaft (14) rotates, the path leading to output means (38) which passes the electromagnetic radiation to a detector (44) therefor which produces a speed-dependent signal dependent on the rotational speed of the shaft (14), characterized in that the engine is an engine whose atmosphere includes combustion products which are opaque to visible electromagnetic radiation, in that the path extends through part of the atmosphere within the engine, and in that the electromagnetic radiation produced by the source (32) and detected by the detector (44) is infra-red radiation which is substantially not attenuated by the combustion products.

2. Apparatus according to claim 1, characterised in that the engine is a turbine engine.

3. Apparatus according to claim 1 or 2, characterized in that the input and output means respectively comprise input and output optical fibres (34,38), each having a first end, the source (32) and the detector (44) being respectively positioned adjacent the two first ends, the opposite or second ends (40′,42′) of the optical fibres (34,38) respectively defining the two ends of the said path.

4. Apparatus according to claim 3, characterized in that the second end (40′,42′) of each of the optical fibres (34,38) includes a respective angled face (40,42) positioned at such an angle to the central axis of the respective fibre (34,38), in dependence on the position of that axis in relation to the direction of the said path, that the faces (40,42) respectively reflect the infra-red radiation into the said path from the input optical fibre (34) and out of the said path into the output optical fibre (38).

5. Apparatus according to claim 4, characterized in that the second end (40′,42′) of each of the optical fibres (34,38) includes a respective flat face through which the infra-red radiation passes in travelling between the respective angled face (40,42) and the said path.

6. Apparatus according to claim 5, characterized in that the flat faces are parallel to each other.

7. Apparatus according to any one of claims 4 to 6, characterized in that the angled faces (40,42) lie in respective planes which are positioned at 90° to each other.

8. Apparatus according to any preceding claim, characterized by a speed comparator (56) responsive to the speed-dependent signal for comparing the sensed speed of the shaft (14) with a predetermined limit speed, and by means (58) for interrupting the supply of fuel to the engine if the actual speed exceeds the limit speed.

9. Apparatus according to any preceding claim, characterized in that the wavelength of the infra-red radiation lies between about 780 nm and 300,000 nm.

10. Apparatus according to claim 9, characterized in that the wavelength of the infra-red radiation lies between about 900 nm and 1,100 nm.

11. Apparatus according to claim 9, characterized in that the wavelength of the infra-red radiation lies between about 780 nm and 2,500 nm.

12. Apparatus according to any preceding claim, characterized in that the wavelength of infra-red radiation is substantially different from the peak wavelength of the radiation of a black body having substantially the same temperature as the normal working temperature within the engine.

13. A method of sensing the rotational speed of a shaft (14) of an engine, comprising the steps of defining a path for electromagnetic radiation, passing electromagnetic radiation along the path, interrupting the electromagnetic radiation in the path in dependence on the rotational speed of the shaft (14), and detecting the electromagnetic radiation received from the path after such interruption, whereby to produce a speed-dependent signal dependent on the interruption rate and thereby dependent on the rotational speed of the shaft (14), characterized in that the engine is an engine the atmosphere in which contains carbonaceous combustion products which are opaque to visible electromagnetic radiation, in that the path extends through part of the atmosphere within the engine, and in that the step of passing electromagnetic radiation along the path comprises the step of passing infra-red radiation therealong which is substantially not attenuated by the combustion products.

14. A method according to claim 13, characterised in that the engine is a turbine engine.

15. A method according to claim 13 or 14, characterized in that the wavelength of the infra-red radiation is substantially different from the peak wavelength of a black body having substantially the same temperature as the normal working temperature within the engine.

16. A method according to any one of claims 13 to 15, characterized in that the temperature in and adjacent to the said path is about 260C.

17. A method according to any one of claims 13 to 16, characterized in that the wavelength of the infra-red radiation lies between about 780 nm and about 300,000 nm.

18. A method according to claim 17, characterized in that the wavelength of the infra-red radiation lies between about 900 nm and about 1,100 nm.

19. A method according to claim 17, characterized in that the wavelength of the infra-red radiation lies between about 780 nm and about 2,500 nm.

20. A method according to any one of claims 13 to 19, characterized by the step of comparing the sensed rotational speed of the shaft (14) with a predetermined limit, and the step of reducing the speed of the shaft when the sensed speed exceeds the predetermined limit.

21. A method according to any one of claim 13 to 20, characterised by the steps of feeding the electromagnetic radiation to the path from a source and away from the path to a detector, and in that the feeding steps comprise the steps of feeding the radiation along optical fibres (34,38).

22. A method according to claim 21, characterised in that the feeding steps comprise the step of reflecting the radiation from one of the optical fibres (34) into the path via an angled face (40) at the adjacent end (40′) of that optical fibre (34) and the step of reflecting the radiation from the path into the other optical fibre (38) via an angled face (42) at the adjacent end (42′) of that optical fibre (38).

23. A method according to claim 22, characterised in that the step of reflecting the radiation into the said path from the said one optical fibre (34) includes the step of passing the radiation from the angled face (40) thereof through a flat face thereof, and the step of reflecting the radiation from the said path into the other optical fibre (38) includes the step of passing the radiation through a flat face of that optical fibre (38) adjacent the angled face (42) thereof.

## Patentansprüche

1. Vorrichtung, die in Kombination eine Maschine mit einer drehenden Welle (14) und eine Geschwindigkeitserkennungsvorrichtung (28) zum Erkennen der Drehgeschwindigkeit der Welle (14) aufweist, wobei die Vorrichtung umfaßt: eine Quelle (32) elektromagnetischer Strahlung, einen zur Drehung mit der Welle (14) angebrachten Zerhacker (30) für die elektromagnetische Strahlung, eine Eingangseinrichtung (34), welche die elektromagnetische Strahlung von der Quelle (32) zu einem Ende eines Pfades leitet, der derart angeordnet ist, daß er von dem Zerhacker (30) bei der Drehung der Welle (14) unterbrochen wird, wobei der Pfad zu einer Ausgangseinrichtung (38) führt, welche die elektromagnetische Strahlung an einen dafür vorgesehenen Detektor (44) weiterleitet, der ein geschwindigkeitsabhängiges Signal erzeugt, das von der Drehgeschwindigkeit der Welle (14) abhängt, dadurch gekennzeichnet, daß die Maschine eine Maschine ist, in deren Atmospäre Verbrennungsprodukte enthalten sind, die für sichtbare elektromagnetische Strahlung opak sind, daß sich der Pfad durch einen Teil der Atmosphäre innerhalb des Motors erstreckt, und daß die von der Quelle (32) erzeugte und von dem Detektor (44) erkannte elektromagnetische Strahlung Infrarot-Strahlung ist, die von den Verbrennungsprodukten im wesentlichen nicht gedämpft wird.

2. Vorrichtung nach Anspruch 1, dadurch gekennzeichnet, daß die Maschine eine Turbinenmaschine ist.

3. Vorrichtung nach Anspruch 1 oder 2, dadurch gekennzeichnet, daß die Eingangs- und die Ausgangseinrichtung jeweils optische Eingangs- und Ausgangsfasern (34, 38) aufweisen, die jeweils ein erstes Ende aufweisen, wobei die Quelle (32) und der Detektor (44) jeweils in der Nähe der beiden ersten Enden angeordnet sind, und wobei die entgegengesetzten oder zweiten Enden (40′, 42′) der optischen Fasern (34, 38) jeweils die beiden Enden des Pfades bilden.

4. Vorrichtung nach Anspruch 3, dadurch gekennzeichnet, daß das zweite Ende (40′, 42′) jeder der optischen Fasern (34, 38) jeweils eine angewinkelte Fläche (43, 42) aufweist, die, zur Mittelachse der jeweiligen Faser (34, 38), in Abhängigkeit von der Position dieser Achse zu der Richtung des Pfades, in einem derartigen Winkel angeordnet ist, daß die Flächen (40, 42) jeweils die Infrarot-Strahlung von der optischen Eingangsfaser (34) in den Pfad und aus dem Pfad hinaus in die optische Ausgangsfaser (38) reflektieren.

5. Vorrichtung nach Anspruch 4, dadurch gekennzeichnet, daß das zweite Ende (40′, 42′) jeder der optischen Fasern (34, 38) jeweils eine ebene Fläche aufweist, welche die Infrarot-Strahlung bei der Bewegung zwischen den jeweiligen angewinkelten Flächen (40, 42) und dem Pfad durchläuft.

6. Vorrichtung nach Anspruch 5, dadurch gekennzeichnet, daß die ebenen Flächen zueinander parallel sind.

7. Vorrichtung nach einem der Ansprüche 4 bis 6, dadurch gekennzeichnet, daß die angewinkelten Flächen (40, 42) in jeweiligen Ebenen liegen, die im Winkel von 90° zueinander angeordnet sind.

8. Vorrichtung nach einem der vorhergehenden Ansprüche, gekennzeichnet durch einen auf das geschwindigkeitsabhängige Signal reagierenden Geschwindigkeitskomparator (56) zum Vergleichen der erkannten Geschwindigkeit der Welle (14) mit einer vorbestimmten Grenzgeschwindigkeit, und durch eine Einrichtung (58) zum Unterbrechen der Kraftstoffzufuhr zur Maschine, wenn die Ist-Geschwindigkeit die Grenzgeschwindigkeit überschreitet.

9. Vorrichtung nach einem der vorhergehenden Ansprüche, dadurch gekennzeichnet, daß die Wellenlänge der Infrarot-Strahlung zwischen ungefähr 780 nm und 300000 nm liegt.

10. Vorrichtung nach Anspruch 9, dadurch gekennzeichnet, daß die Wellenlänge der Infrarot-Strahlung zwischen ungefähr 900 nm und 1100 nm liegt.

11. Vorrichtung nach Anspruch 9, dadurch gekennzeichnet, daß die Wellenlänge der Infrarot-Strahlung zwischen ungefähr 780 nm und 2500 nm liegt.

12. Vorrichtung nach einem der vorhergehenden Ansprüche, dadurch gekennzeichnet, daß die Wellenlänge der Infrarot-Strahlung wesentlich von der Peak-Wellenlänge der Strahlung eines schwarzen Körpers mit einer der normalen Betriebstemperatur innerhalb der Maschine im wesentlichen gleichen Temperatur verschieden ist.

13. Verfahren zum Erkennen der Drehgeschwindigkeit einer Welle (14) einer Maschine, mit den folgenden Schritten: Bilden eines Pfades für elektromagnetische Strahlung, Leiten der elektromagnetischen Strahlung entlang des Pfades, Unterbrechen der elektromagnetischen Strahlung in dem Pfad in Abhängigkeit von der Drehgeschwindigkeit der Welle (14), und Erkennen der aus dem Pfad nach einer solchen Unterbrechung empfangenen elektromagnetischen Strahlung, um daraus ein geschwindigkeitsabhängiges Signal zu erzeugen, das von der Unterbrechungsrate und damit von der Drehgeschwindigkeit der Welle (14) abhängt, dadurch gekennzeichnet, daß der Motor ein Motor ist, dessen darin befindliche Umgebungsluft kohlenstoffhaltige Verbrennungsprodukte aufweist, die für sichtbare elektromagnetische Strahlung undurchlässig sind, daß sich der Pfad durch einen Teil der Umgebungsluft innerhalb des Motors erstreckt, und daß der Schritt des Leitens elektromagnetischer Strahlung entlang des Pfades den Schritt des Leitens von Infrarot-Strahlung, die im wesentlichen nicht von den Verbrennungsprodukten gedämpft wird, entlang diesem beinhaltet.

14. Verfahren nach Anspruch 13, dadurch gekennzeichnet, daß der Motor ein Turbinenmotor ist.

15. Verfahren nach Anspruch 13 oder 14, dadurch gekennzeichnet, daß die Wellenlänge der Infrarot-Strahlung wesentlich von der Peak-Wellenlänge der Strahlung eines schwarzen Körpers mit einer der normalen Betriebstemperatur innerhalb des Motors im wesentlichen gleichen Temperatur verschieden ist.

16. Verfahren nach einem der Ansprüche 13 bis 15, dadurch gekennzeichnet, daß die Temperatur in dem Pfad und in der Nähe des Pfades ungefähr 260° C beträgt.

17. Verfahren nach einem der Ansprüche 13 bis 16, dadurch gekennzeichnet, daß die Wellenlänge der Infrarot-Strahlung zwischen ungefähr 780 nm und ungefähr 300000 nm liegt.

18. Verfahren nach Anspruch 17, dadurch gekennzeichnet, daß die Wellenlänge der Infrarot-Strahlung zwischen ungefähr 900 nm und ungefähr 1100 nm liegt.

19. Verfahren nach Anspruch 17, dadurch gekennzeichnet, daß die Wellenlänge der Infrarot-Strahlung zwischen ungefähr 780 nm und ungefähr 2500 nm liegt.

20. Verfahren nach einem der Ansprüche 13 bis 19, gekennzeichnet durch den Schritt des Vergleichens der erkannten Drehgeschwindigkeit der Welle (14) mit einem vorbestimmten Grenzwert, und den Schritt des Verringerns der Geschwindigkeit, wenn die erkannte Geschwindigkeit den vorbestimmten Grenzwert übersteigt.

21. Verfahren nach einem der Ansprüche 13 bis 20, gekennzeichnet durch die Schritte des Zuführens der elektromagnetischen Strahlung von einer Quelle zum Pfad und vom Pfad zu einem Detektor, und dadurch, daß die Zuführschritte die Schritte des Zuführens der Strahlung entlang optischer Fasern (34, 38) beinhalten.

22. Verfahren nach Anspruch 21, dadurch gekennzeichnet, daß die Schritte des Zuführens den Schritt des Reflektierens der Strahlung von einer der optischen Fasern (34) über eine angewinkelte Fläche (40) am benachbarten Ende (40′) dieser optischen Faser (34) in den Pfad und den Schritt des Reflektierens der Strahlung aus dem Pfad in die andere optische Faser (38) über eine angewinkelte Fläche (42) am benachbarten Ende (42′) dieser optischen Faser (38) beinhalten.

23. Verfahren nach Anspruch 22, dadurch gekennzeichnet, daß der Schritt des Reflektierens der Strahlung von der einen optischen Faser (34) in den Pfad den Schritt des Leitens der Strahlung von der angewinkelten Fläche (40) derselben durch eine ebene Fläche derselben beinhaltet, und der Schritt des Reflektierens der Strahlung aus dem Pfad in die andere optische Faser (38) den Schritt des Leitens der Strahlung durch eine ihrer angewinkelten Fläche (42) benachbarte ebene Fläche dieser optischen Faser (38) beinhaltet.

## Revendications

1. Dispositif comprenant, en combinaison, un moteur pourvu d'un arbre rotatif (14) et un dispositif (28) de détection de vitesse prévu pour détecter la vitesse de rotation de l'arbre (14), le dispositif comportant une source (32) de rayonnement électromagnétique, un hacheur (30) de rayonnement électromagnétique monté pour tourner avec l'arbre (14), un moyen d'entrée (34) conduisant le rayonnement électromagnétique depuis la source (32) vers une extrémité d'un trajet qui est positionné de manière à être interrompu par le hacheur (30) lorsque l'arbre (14) tourne, le trajet menant vers un moyen de sortie (38) qui envoie le rayonnement électromagnétique vers un détecteur approprié (44) qui produit un signal fonction de la vitesse qui est fonction de la vitesse de rotation de l'arbre (14), caractérisé en ce que le moteur est un moteur dont l'atmosphère comprend des produits de combustion qui sont opaques à un rayonnement électromagnétique visible, en ce que le trajet s'étend à travers une partie de l'atmosphère située à l'intérieur du moteur, et en ce que le rayonnement électromagnétique produit par la source (32) et détecté par le détecteur (44) est un rayonnement infrarouge qui est sensiblement non atténué par les produits de combustion.

2. Dispositif selon la revendication 1, caractérisé en ce que le moteur est un moteur à turbine.

3. Dispositif selon la revendication 1 ou 2, caractérisé en ce que les moyens d'entrée et de sortie comprennent respectivement des fibres optiques d'entrée et de sortie (34, 38) pourvues chacune d'une première extrémité, la source (32) et le détecteur (44) étant respectivement positionnés en étant adjacent aux deux premières extrémités, les extrémités opposées ou deuxièmes extrémités (40′, 42′) des fibres optiques (34, 38) définissant respectivement les deux extrémités dudit trajet.

4. Dispositif selon la revendication 3, caractérisé en ce que la deuxième extrémité (40′, 42′) de chacune des fibres optiques (34, 38) comporte une face inclinée respective (40, 42) positionnée par rapport à l'axe central de la fibre respective (34, 38), en fonction de la position de cet axe par rapport à la direction dudit trajet, selon un angle tel que les faces (40, 42) réfléchissent respectivement le rayonnement infrarouge vers ledit trajet depuis la fibre optique d'entrée (34) et hors dudit trajet vers ladite fibre optique de sortie (38).

5. Dispositif selon la revendication 4, caractérisé en ce que la deuxième extrémité (40′, 42′) de chacune des fibres optiques (34, 38) comporte une face plate respective que traverse ledit rayonnement infrarouge lorsqu'il se déplace entre la face inclinée respective (40, 42) et ledit trajet.

6. Dispositif selon la revendication 5, caractérisé en ce que les faces plates sont parallèles entre elles.

7. Dispositif selon l'une quelconque des revendications 4 à 6, caractérisé en ce que les faces inclinées (40, 42) sont situées dans des plans respectifs qui sont positionnés à 90° l'un par rapport à l'autre.

8. Dispositif selon une revendication précédente quelconque, caractérisé par un comparateur de vitesse (56), sensible au signal fonction de la vitesse pour comparer à une vitesse limite prédéterminée la vitesse détectée de l'arbre (14), et par un moyen (58) d'interruption de l'alimentation en carburant du moteur si la vitesse réelle dépasse la vitesse limite.

9. Dispositif selon une revendication précédente quelconque, caractérisé en ce que la longueur d'onde du rayonnement infrarouge est située entre 780 nm et 300 000 nm.

10. Dispositif selon la revendication 9, caractérisé en ce que la longueur d'onde du rayonnement infrarouge est située entre environ 900 nm et 1 100 nm.

11. Dispositif selon la revendication 9, caractérisé en ce que la longueur d'onde du rayonnement infrarouge est située entre environ 780 nm et 2 500 nm.

12. Dispositif selon une revendication précédente quelconque, caractérisé en ce que la longueur d'onde du rayonnement infrarouge est sensiblement différente de la longueur d'onde de pic du rayonnement d'un corps noir dont la température est sensiblement la même que la température normale de régime à l'intérieur du moteur.

13. Un procédé de détection de la vitesse de rotation d'un arbre (14) d'un moteur, comprenant les étapes consistant à :
définir un trajet pour un rayonnement électromagnétique,
faire passer un rayonnement électromagnétique le long du trajet,
interrompre le rayonnement électromagnétique dans le trajet en fonction de la vitesse de rotation de l'arbre (14), et
détecter le rayonnement électromagnétique reçu du le trajet après cette interruption, afin de produire ainsi un signal fonction de la vitesse qui est fonction de la fréquence d'interruption et qui est donc fonction de la vitesse de rotation de l'arbre (14),
caractérisé en ce que le moteur est un moteur dans lequel l'atmosphère contient des produits carbonés de combustion qui sont opaques à un rayonnement électromagnétique visible,
en ce que le trajet s'étend à travers une partie de l'atmosphère à l'intérieur du moteur, et
en ce que l'étape consistant à faire passer le rayonnement électromagnétique le long du trajet comprend l'étape consistant à faire passer le long de celui-ci un rayonnement infrarouge qui est sensiblement non atténué par les produits de combustion.

14. Un procédé selon la revendication 13, caractérisé en ce que le moteur est un moteur à turbine.

15. Un procédé selon la revendication 13 ou 14, caractérisé en ce que la longueur d'onde du rayonnement infrarouge est sensiblement différente de la longueur d'onde de pic d'un corps noir dont la température est sensiblement la même que la température normale de régime à l'intérieur du moteur.

16. Un procédé selon l'une quelconque des revendications 13 à 15, caractérisé en ce que la température dans ledit trajet et au voisinage de celui-ci est d'environ 260°C.

17. Un procédé selon l'une quelconque des revendications 13 à 16, caractérisé en ce que la longueur d'onde du rayonnement infrarouge est située entre environ 780 nm et environ 300 000 nm.

18. Un procédé selon la revendication 17, caractérisé en ce que la longueur d'onde du rayonnement infrarouge est située entre environ 900 nm et environ 1 100 nm.

19. Un procédé selon la revendication 17, caractérisé en ce que la longueur d'onde du rayonnement infrarouge est située entre environ 780 nm et environ 2 500 nm.

20. Un procédé selon l'une quelconque des revendications 13 à 19, caractérisé par l'étape consistant à comparer à une limite prédéterminée la vitesse de rotation détectée de l'arbre (14) et l'étape consistant à réduire la vitesse de l'arbre lorsque la vitesse détectée dépasse la limite prédéterminée.

21. Un procédé selon l'une quelconque des revendications 13 à 20, caractérisé par les étapes consistant à amener le rayonnement électromagnétique à partir d'une source vers le trajet et à partir du trajet vers un détecteur, et en ce que les étapes d'alimentation comprennent les étapes consistant à amener le rayonnement le long de fibres optiques (34, 38).

22. Un procédé selon la revendication 21, caractérisé en ce que les étapes d'alimentation comprennent l'étape consistant à réfléchir le rayonnement à partir de l'une des fibres optiques (34) vers le trajet au moyen d'une face inclinée (40) située à l'extrémité adjacente (40′) de cette fibre optique (34) et l'étape consistant à réfléchir le rayonnement depuis le trajet vers l'autre fibre optique (38) au moyen d'une face inclinée (42) située à l'extrémité adjacente (42′) de cette fibre optique (38).

23. Un procédé selon la revendication 22, caractérisé en ce que l'étape consistant à réfléchir le rayonnement vers ledit trajet à partir de ladite première fibre optique (34) comporte l'étape consistant à faire passer le rayonnement depuis sa face inclinée (40) à travers une face plate de celle-ci, et l'étape consistant à réfléchir le rayonnement depuis ledit trajet vers l'autre fibre optique (38) comporte l'étape consistant à faire passer le rayonnement à travers une face plate de cette fibre optique (38) adjacente à sa face inclinée (42).
